# EUROPÄISCHE PATENTSCHRIFT

(11) **EP 2 716 370 B1**
(45) Veröffentlichungstag und Bekanntmachung des Hinweises auf die Patenterteilung: **08.08.2018**
(21) Anmeldenummer: 13185927.4
(22) Anmeldetag: 25.09.2013
(51) Int. Cl.: B05C 5/00, B05C 5/02, B05C 11/10, B82Y 30/00

(54) **Heißauftragssystem**
Hot coating material application system
Système d'application de matériau de revêtement chauffé

(30) Priorität: 08.10.2012 DE 102012109524
(43) Veröffentlichungstag der Anmeldung: 09.04.2014
(73) Patentinhaber: Baumer hhs GmbH, 47829 Krefeld (DE)
(72) Erfinder: Istemaas, Wilhelm, 46419 Isselburg (DE); Walther, Thomas, 47803 Krefeld (DE)
(74) Vertreter: Strauss, Steffen

(56) Entgegenhaltungen:
- EP-A1- 1 332 803
- DE-A1-102007 050 544
- DE-U1-202007 015 763

## Beschreibung

### Stand der Technik

Heißleim, auch bekannt als Schmelzklebstoff oder Hotmelt, wird in der Industrie in unterschiedlichsten Anwendungen eingesetzt, um Materialien oder Produkte miteinander zu verkleben.

Schmelzvergussstoffe dienen dazu, elektrische und/oder elektronische Komponenten zu vergießen.

Schmelzklebstoffe oder Schmelzvergussstoffe gehören zu den physikalisch abbindenden Klebstoff- oder Vergussarten. Sie liegen bei Raumtemperatur einkomponentig in fester Form vor und werden durch Wärmezufuhr verflüssigt.

Neben den rein physikalisch abbindenden Schmelzkleb- oder Vergussstoffen gibt es reaktive Varianten, die eine Kombination aus physikalisch abbindenden und chemisch reagierenden Systemen darstellen.

Im Folgenden werden rein physikalisch abbindende Schmelzstoffe und Schmelzstoffe mit einer chemischen Nachreaktion unter dem Begriff "Schmelzklebstoff" oder "Schmelzvergussstoff" subsumiert.

Heißauftragssysteme dienen dazu, Schmelzklebstoffe in einer vorbestimmten Weise, beispielsweise flächig, in Spuren, Punkten etc. auf ein Substrat aufzutragen. Heißauftragssysteme werden teilweise auch dafür verwendet, Vergussstoffe aufzuschmelzen.

Ein Heißauftragssystem umfasst mindestens ein Schmelzgerät, das dazu dient, den Schmelzklebstoff oder den Schmelzvergussstoff aufzuschmelzen.

Das Schmelzgerät umfasst einen Tank, in dem der Schmelzklebstoff oder der Schmelzvergussstoff in festem Zustand als Granulat oder in Blockform aufgegeben wird. Er dient zur Bevorratung und Verflüssigung des Schmelzklebstoffs bzw. des Schmelzvergussstoffs. Mittels einer Heizung, die eine oder mehrere Heizzonen aufweisen kann wird der Tank soweit erwärmt, dass sich der Schmelzklebstoff bzw. der Schmelzvergussstoff verflüssigt. Zur Einhaltung der Betriebstemperatur wird, je nach Anzahl der Heizzonen, über einen oder mehrere Temperatursensoren die Ist-Temperatur für die Regelung erfasst.

Die Beheizung des Tankblocks erfolgt mit Heizpatronen, die mit oder ohne Thermoelement (-sensoren) zur Erfassung der Temperatur ausgestattet sind. Temperatursensoren können auch als eigenständige Sensoren, unabhängig von der Heizpatrone angeordnet sein.

Bei den Heizpatronen handelt es sich in der Regel um elektrisch isolierte Widerstandsheizungen, die in einen meist metallischen Grundkörper, der Bestandteil der Tankbaugruppe des Schmelzers ist, eingelassen werden. Über diesen Grundkörper wird die Wärme auf eine größere Fläche verteilt. Der Nachteil dieser Heizart ist, dass die Wärme lokal durch die Heizpatronen eingebracht wird und sich erst über Wärmeleitung auf eine größere Fläche verteilt. Dies bedarf einer exakten Simulation und Erprobung der Wärmeverteilung, um die gewünschte gleichmäßige Wärmeverteilung ohne "Hot-Spots" (Wärmenester mit lokal erhöhter Temperatur) oder kalte Stellen zu erzeugen.

Bei zu hohen Temperaturen kann es zu einer thermischen/oxidativen Schädigung der Schmelze kommen. Der Fachmann spricht auch von "Verkoken" oder "Vercracken" der Schmelze. Lokale Wärmenester ("Hot-Spots") können dazu führen, dass die Schmelze an diesen Stellen verbrennt. Die dabei entstehenden Rückstände können sich lösen und Elemente auf dem Transportweg bis zum Austragungsort der Schmelze verstopfen. Dies kann bis zu einem totalen Produktionsausfall und Prozessstörungen, verbunden mit einem hohen Reinigungsaufwand, führen.

Um diese gleichmäßige Wärmeverteilung und Wärmespeicherung zu erzielen, muss der Grundkörper, in dem die Heizpatronen eingelassen sind, eine gewisse Masse aufweisen. Durch diese ist die Herstellung mit erhöhten Kosten verbunden und die Tankbaugruppe ist schwerer als sie ohne das Problem der Wärmenester wäre.

Alternativ kann die Erwärmung auch über Heizmatten geschehen, die um den Tank des Schmelzers gewickelt werden. Heizmatten haben aber den Nachteil, dass der Wärmeübergang auf die Tankbaugruppe nicht ideal ist. Auch lassen sich diese, aufgrund einer gewissen Eigensteifigkeit, nicht an jede Kontur anpassen.

Beide Heizarten werden in der Regel mit elektrischen Spannungen betrieben, die im Fehlerfall für den Betreiber gefährlich werden können. Je nach Gerät werden die Heizpatronen mit 230V oder mehr gespeist, wobei häufig mehrere Heizpatronen mit niedrigeren Nennspannungen in Reihe geschaltet werden.

Ferner umfasst das Heißauftragsgerät eine Pumpe, die die in dem Tank aufgeschmolzene Schmelze über einen Verteiler zu den Verbrauchern fördert.

Der Verteiler umfasst einen oder mehrere Hydraulikanschlüsse, an dem ein oder mehrere beheizbare Förderschläuche zur Versorgung mit dem Schmelzklebstoff oder Schmelzvergussstoff angeschlossen sind.

Die beheizten Förderschläuche dienen zum Transport des Schmelzklebstoffs oder Schmelzvergussstoffs zu dem Austragungsort oder zu den angeschlossenen Auftragsventilen. Sie werden ebenfalls durch eine Heizung erwärmt, um die zugeführte Schmelze im flüssigen Zustand zu halten. Ein beheizbarer Förderschlauch besteht aus mindestens einem inneren Fluid führenden Schlauchteil und einem äußeren Schlauchteil, das ein oder mehrere Lagen umfassen kann. Mindestens eine dieser Lagen umfasst mindestens ein elektrisches Heizelement, das meist aus elektrischen Leiterdrähten besteht, die sich wendelförmig oder in Netzform um den inneren Fluid führenden Schlauch winden. Diese Leiter werden an mindestens einem Schlauchende herausgeführt und mit Stromquellen und/oder steuernden Geräten angeschlossen.

Diese Art der Beheizung birgt ebenfalls die Gefahr der Bildung von "Hot-Spots" mit der Gefahr von lokalen oder großflächigen Verbrennungen. In den meisten Fällen sind die beheizten Förderschläuche flexibel ausgeführt. Bei einer Biegebelastung können sich die innen liegenden Heizwendel oder Heiznetze verschieben und örtlich konzentrieren, mit der Auswirkung, dass die Schmelze an dieser Stelle überhitzt werden kann.

Die durchgehenden Leiter bergen ferner die Gefahr, dass diese bei Biegebelastungen oder anderen mechanischen Belastungen beschädigt werden können. Im schlimmsten Fall kommt es dann zu einem Totalausfall der Beheizung, lokale Widerstandserhöhungen in dem Heizleiter können aber auch zu lokalen Überhitzungen führen.

Beheizte Auftragsventile sorgen über ein elektrisch oder elektropneumatisch betätigtes Verschlussorgan und eine Düse für die Dosierung und Positionierung einer auf ein Produkt aufzubringenden Schmelzklebstoffportion. Sie werden über eine Heizung erwärmt, um den von dem Schmelzgerät über die beheizbaren Förderschläuche zugeführten Schmelzklebstoff bzw. Schmelzvergusswerkstoff so weit zu verflüssigen, dass er abhängig von der Anwendung mit der benötigten Viskosität und Temperatur über die Düse aufgetragen werden kann.

Ventile werden ebenfalls mit Heizpatronen beheizt, mit etwa vergleichbaren Auswirkungen auf den Aufbau und die Wärmeverteilung wie bei dem Tank. Die benötigte Masse des Grundkörpers zur Wärmespeicherung und Wärmeleitung macht eine effektive und schutztechnisch geforderte Wärmeschutzisolierung schwierig, da das Auftragsventil baulich größer ausfällt. Die Forderung nach einem besonders kleinen Ventil, mit dem auch räumlich anspruchsvolle Anwendungen realisiert werden können, konkurriert mit den schutztechnischen Anforderungen, Schmelzklebstoffauftragsventile haben ohne separate Schutzvorrichtung hohe Oberflächentemperaturen (zwischen 120 und 220°C), die bei Berührung schwere Verbrennungen verursachen können.

Eine punktuelle Erhitzung kann nicht nur zu einer ungleichmäßigen Erwärmung führen, sondern auch zu einer weitaus größeren Materialbeanspruchung, beispielsweise durch eine örtlich unterschiedliche thermische Ausdehnung des Materials.

Erfolgt die Erwärmung des jeweiligen Grundkörpers von einer punktuellen Wärmequelle aus, so benötigt die Wärmeleitung eine gewisse Zeit, bis eine etwa gleichmäßige Wärmeverteilung erzielt wird. Diese Aufwärmzeit kann hinderlich sein, wenn eine Produktion schnell gestartet werden soll (unproduktive Wartezeit).

Um zu vermeiden, dass die Düse während der Abgabe aufgrund eines Erstarrens von aufzubringenden Schmelzklebstoffportionen verstopft, muss die Temperatur, auf die das Ventil mit Hilfe der Heizpatronen aufgeheizt wird, deutlich über die Schmelztemperatur des Schmelzklebstoffs aufgeheizt werden, da die Düse aufgrund der relativ hohen Oberfläche mit der damit verbundenen Wärmeabstrahlung eine niedrigere Temperatur als der eigentliche Ventilkörper aufweisen kann.

Neuerdings sind Heizelemente (unter anderem aus der DE 10 2009 034 306 A1 und DE 10 2007 004 953 A1) bekannt geworden, die eine bei Stromdurchfluss Wärme erzeugende Schicht aufweisen, wobei aus einem Trägermaterial eine geschlossene Schicht aufgebracht wird, welche aus einer Verbunddispersion besteht, die einen Anteil Haftmittel, einen Anteil Füllmittel und einen Anteil Kohlenstoffnanoröhren umfasst, wobei an die flächige Schicht angrenzende streifenförmige Kontakte angebracht sind.

Kohlenstoffnanoröhren (carbon nanotubes, CNT) sind für ihre außergewöhnlichen Eigenschaften bekannt. So beträgt ihre Festigkeit das Hundertfache des Stahls, deren thermische Leitfähigkeit ist etwa so groß wie die eines Diamanten, ihre thermische Stabilität erreicht bis zu 2800 °C im Vakuum und deren elektrische Leitfähigkeit kann ein Vielfaches der von Kupfer betragen (siehe auch DE 10 2010 008 173 A1; EP 1 428 573 B1; DE 10 2010 005 560 A1 und die jeweils dort zitierte Literatur). Eine Handelsmarke von CNT-Nanotubes ist "Baytubes" der Firma Bayer Material Science (siehe www.baytubes.com).

Der Vorteil von CNT liegt unter anderem darin, dass sie sich in Dispersionen (siehe DE 10 2010 042 209 A1, WO 2009/100865) dispergieren lassen, so dass die Dispersionen elektrisch leitfähig werden. Auf einen Gegenstand oder Substrat aufgestrichen, können diese eine Widerstandsheizung für das Erwärmen eines Substrates bilden. Eine Handelsmarke solcher CNT-haltigen Beschichtungen ist "Carbo e-Therm" der Firma Future Carbon (siehe www.future-carbon.de).

CNT lassen sich auch gut in Vergussmassen einbringen, so dass diese Vergussmassen elektrisch leitfähig werden.

Enthält die Strom leitende Schicht CNT, so können diese schon bei einem sehr geringen Anteil eine für die Wärmeentwicklung ausreichende Stromleitung erzielen. Dies hat zur Folge, dass solche Heizelemente mit sicherer Schutzkleinspannung, zum Beispiel 12V oder 24V, betrieben werden können.

Ein weiterer Vorteil der Heizelemente mit CNT ist, dass diese weniger störanfällig im Vergleich zu den bisher bekannten Heizelementen sind, da eine Stromleitung in der gesamten CNT-haltigen Beschichtung oder Vergussmasse und damit eine Erwärmung auch dann erfolgt, wenn das Material an der einen oder anderen Stelle beschädigt ist.

Ein weiterer Vorteil solcher CNT-haltigen Beschichtungen oder Vergussmassenist, dass durch eine gezielte Variation der Schichtdicken die lokale Wärmeverteilung gesteuert werden kann. So können Zonen mit stärkerer Erwärmung und Zonen mit geringerer Erwärmung geschaffen werden.

Die CNT-haltige Beschichtung kann auch in eine fasrige Struktur oder ein textiles Flächengebilde eingebracht werden, wie die DE 20 20045 013 822 U1 zeigt. Die fasrige Struktur mit der darin enthaltenen CNT-Beschichtung dient in diesem Fall als Heizelement.

Die CNT-haltige Beschichtung kann auch in ein Kunststoff-Verbundmaterial eingebracht werden und dann als Heizklebeband aufgebracht werden (siehe DE 10 2007 004 953 A1).

Die DE 10 2007 050 544 A1 offenbart eine Walze mit einem Heizelement mit zumindest einem elektrisch leitfähigen Element, das als Nanotube umfassendes Verbundsystem ausgebildet ist. Es ist erwähnt, dass solche beheizbaren Walzen als Auftragswalzen oder Applizierwalzen beispielsweise in so genannten Hotmelt-Anlagen vorgesehen sein können.

### Aufgabe der Erfindung

Die Aufgabe der Erfindung ist es für die Komponenten eines Heißleimauftragssystems eine Heizung zu etablieren, die hinsichtlich der Nachteile der bisherigen Heizsysteme eines Heißleimauftragssystems verbessert ist.

Die Nachteile bisher bekannter Systeme sind knapp zusammengefasst, unter anderem folgende:
- punktuelle Beheizung, damit verbunden die Gefahr von "Hot-Spots" bzwe. ungleichmäßiger Wärmeverteilung
- hohe gefährliche elektrische Versorgungsspannungen der Heizelemente
- keine oder geringe Möglichkeit der geometrischen Adaption an Oberflächen
- Gefahr des Totalausfalls bei Beschädigungen
- relativ große Baugröße der Grundkörper an Tank und Auftragsventilen
- Gefahr der Hautverbrennungen an heißen Oberflächen
- langsame Aufheizzeiten

### Lösung der Aufgabe

Die erfindungsgemäße Aufgabe wird durch ein Heißauftragssystem gelöst, bei dem mindestens eine Komponente des Heißauftragssystems mindestens eine Widerstandsheizung umfasst, die eine CNT-haltige Beschichtung oder Vergussmasse aufweist. Derartige Widerstandsheizungen sollen auch mit "CNT-haltige Beschichtung" bezeichnet werden. Diese Beschichtung oder Vergussmasse kann über einzelne Kontakte oder flächig mit einer Stromquelle kontaktiert sein. Überraschenderweise hat sich gezeigt, dass mit einer derartigen Beschichtung oder Vergussmasse besonders effektiv Aufheiztemperaturen bei diesen Komponenten erzielbar sind, wie sie typischerweise für die Verarbeitung von Schmelzklebstoffen oder Schmelzvergussstoffen erforderlich sind, beispielsweise im Bereich zwischen 100° C und 300° C.

Die CNT müssen nicht die alleinigen, elektrisch leitfähigen Stoffe in der Beschichtung sein. Neben CNT können in dieser Beschichtung auch andere, elektrisch leitfähige Stoffe vorgesehen sein, wenn dies zum Erzielen der von den Widerstandsheizungen gewünschten Eigenschaften wünschenswert oder gar erforderlich erscheint. Diese weiteren, elektrisch leitfähigen Stoffe können beispielsweise metallische Nanopartikel, Russ, und/oder leitfähige Polymere, beispielsweise Polyacetylen, Polyanilin, Polyparaphenylen, Polypyrrol, Polytiophen oder PEDOT:PSS oder Derivate hiervon sein.

Die CNT-haltige Beschichtung kann je nach Auftragsart, CNT-Gehalt und gegebenenfalls Gehalt an anderen, elektrisch leitfähigen Stoffen und auch in Abhängigkeit des Beschichtungsuntergrundes zwischen wenigen Nanometern bis zu einigen Zehnteln Millimetern betragen.

In einer alternativen Ausgestaltung umfasst die mindestens eine Komponente einen Tank für das Medium.

### a) Tank:

Eine CNT-haltige Beschichtung kann in den Innenraum des Heißleimtanks aufgebracht werden, so dass diese in direktem oder indirektem Kontakt über eine dünne Zwischenschicht zu der zu erhitzenden Schmelze steht. Damit ist ein unmittelbarer Wärmeübergang zu dem zu erhitzenden Medium gegeben. Dies ist unter anderem möglich, da CNT-haltige Beschichtungen mit Kleinspannung betrieben werden können, die für den Menschen nicht gefährlich sind. Schmelzklebstoffe und -vergussmassen sind in der Regel elektrisch nicht leitend, so dass ein Kurzschluss über die Schmelze ausgeschlossen ist.

Für die bessere Reinigung kann auf der elektrisch leitenden Schicht eine vorzugsweise dünne Anti-Haft-Schicht, zum Beispiel eine PTFE-Schicht aufgebracht werde. Alternativ kann die CNT-haltige Beschichtung selbst haftverändernd ausgebildet sein, zum Beispiel durch einen Silikon- oder PTFE-Anteil.

Zwischen der CNT-haltigen Beschichtung und dem Tankgrundkörper kann eine isolierende Schicht aufgebracht werden, sofern es sich um einen elektrisch leitfähigen Körper, zum Beispiel aus einem Metall handelt. Vorteilhaft kann der Grundkörper aber auch aus einem nicht leitenden Material, zum Beispiel aus einem Kunststoff, einem Kunststoffverbundmaterial, einem Keramikmaterial etc. ausgebildet sein, das vorzugsweise gute wärmeisolierende Eigenschaften aufweist.

In einer alternativen Ausführung wird die CNT-haltige Beschichtung von außen auf den Tankgrundkörper aufgebracht, wobei der Tankgrundkörper dann mittels Wärmeleitung die entstehende Wärme in den Innenraum des Tanks weiterleitet. Bei einem elektrisch leitenden Tankgrundkörper muss sich zwischen der CNT-haltigen Beschichtung und dem Tankgrundkörper eine elektrisch isolierende Schicht befinden. Vorteil der Lösung ist, dass diese nicht in dem direkten Kontakt mit der Schmelze steht und daher die mechanische und thermische Belastung geringer ist. Der Nachteil ist die höhere benötigte Wärmeenergie, da mehrere thermisch isolierende Schichten überwunden werden müssen.

In beiden Fällen ist in einer Ausbildung vorgesehen, unterschiedliche Heizzonen zu schaffen. Es ist zum Beispiel sinnvoll, im oberen Bereich des Tanks (in Richtung Tankeinfüllöffnung) das eingefüllte Material nur leicht anzuschmelzen, damit es in den unteren Bereich des Tanks fließt. Eine zu frühzeitige hohe thermische Belastung würde die Problematik des Verbrennens (Vercrackens bzw. Verkokens) der Schmelze fördern.

Im unteren Bereich des Tanks muss die Schmelze so aufgeheizt werden, dass sie hinreichend verflüssigt wird und über den beheizten Förderschlauch zu dem Verbraucher transportiert wird.

Unterschiedliche Heizzonen können beispielsweise geschaffen werden, indem zonenweise eine unterschiedliche Dicke der CNT-haltigen Beschichtung aufgetragen wird. Die unterschiedliche Dicke bewirkt unterschiedliche Erwärmungen der verschiedenen Heizzonen.

Unterschiedliche Heizzonen können auch geschaffen werden, indem ringförmig Streifen der CNT-haltigen Beschichtung aufgetragen werden, die einzeln kontaktiert sind und somit einzeln angesteuert werden können.

Die CNT-haltige Beschichtung kann in einem Sprühverfahren aufgetragen, mit Auftragsmitteln (zum Beispiel Walzen, Rollen etc.) oder im Tauchverfahren lackiert werden.

Die CNT-haltige Beschichtung kann aufgetragen werden, indem sie zuerst auf einen Zwischenträger, zum Beispiel eine Trägerfolie oder ein textiles Flächengebilde, aufgetragen wird und dieses dann an dem Tank, zum Beispiel über eine klebende Schicht, fixiert wird.

In einer weiteren Ausbildung besteht der Innentank aus einem relativ dünnen Flächengebilde, zum Beispiel aus einem Metallblech, das in einem größeren Flächengebilde derart platziert wird, dass großflächig ein Spalt zwischen Außentank und Innentank entsteht. In dieser Zwischenfuge kann eine CNT-haltige Vergussmasse eingebracht werden, wobei durch das Vorsehen von Trennwänden im Spalt die Wärmeverteilung gesteuert werden kann. Diese CNT-haltige Vergussmasse entspricht hinsichtlich ihrer Funktionalität und Eigenschaften wesentlich der CNT-haltigen Beschichtung.

Dieser Ansatz hat den Vorteil, dass das Innenteil ein einfach herzustellendes und kostengünstiges Blechteil sein kann, der Tank aber aufgrund der Vergussmasse und dem Außentank (zum Beispiel aus Kunststoff oder Metall) eine hohe Stabilität aufweist.

### b) Förderschlauch:

Alternativ oder zusätzlich zu dem Tank umfasst die mindestens eine Komponente einen Förderschlauch für das Medium.

Die CNT-haltige Beschichtung kann direkt auf dem Fluid fördernden Innenschlauch befestigt vorzugsweise aufgebracht werden. Der Innenschlauch ist meist aus nichtleitfähigem Kunststoff oder Gummimaterial, so dass eine separate Isolierung nach innen nicht nötig ist.

Nach außen kann die Isolierung durch den Außenschlauch dargestellt werden.

Idealerweise wird der Innenschlauch des Förderschlauchs direkt aus einem CNT-haltigen Kunststoff oder Gummimaterial extrudiert oder in einer anderen geeigneten Weise geformt. In diesem Fall kann der direkte Wärmeübergang auf das Medium sichergestellt werden, wodurch schneller Aufheizzeiten erreicht werden und der Wärmeübergang flächig erfolgt. Elektroden zum Eintrag der elektrischen Leistung in die CNT-haltige Beschichtung können an den beiden Enden des Schlauchs angebracht werden.

Der Vorteil dieser Lösung ist ferner, dass Biegungen oder andere typische Verformungen, denen ein Förderschlauch unterliegt, zu keinen Veränderungen der Erwärmungszonen führt, die zum Beispiel bei wendelförmig um den Schlauch gelegten Heizleitern öfters passiert.

### c) Auftragsventil

Alternativ oder zusätzlich zu dem Tank oder/und dem Förderschlauch umfasst die mindestens eine Komponente ein Auftragsventil zur Abgabe des Mediums an ein Substrat.

Das Auftragsventil kann äquivalent zu dem Tank ausgebildet, d.h. mit einer CNT-haltigen Beschichtung versehen sein, wobei vorzugsweise im Außenbereich des Ventils ein nicht oder schlecht wärmeleitendes Material vorgesehen wird, um Verbrennungen zu vermeiden.

Die Düse des Auftragsventils wird bisher über Wärmeleitung aus dem beheizten Ventilkörper mit erwärmt. Dies führt dazu, dass der Leim im Ventil höher erhitzt werden muss, um den Wärmeverlust beim Durchgang durch die Düse zu kompensieren.

Vorzugsweise ist nun auch die Düse mit einer CNT-haltigen Beschichtung versehen, beispielsweise in der Form eines offenen Rings um die Düse herum gelegt oder streifenförmig von dem Düseneingang bis zum Düsenausgang, wobei an den Enden jeweils Elektroden zur Zufuhr elektrischer Energie befestigt sind.

Besonders bevorzugt ist eine Düse mit einer CNT-haltigen Beschichtung versehen, wenn es sich bei der Düse um eine Breitschlitzdüse handelt. Gerade bei Breitschlitzdüsen ist die Verwendung leitfähiger beheizbarer Beschichtungen besonders vorteilhaft, da durch die Möglichkeit eines sehr dünnen Auftrags der CNT-haltigen Beschichtung nahezu der gesamte Innenraum einer Breitschlitzdüse beheizt werden kann. Auch kommt hier die besonders gute Konturanpassbarkeit besonders vorteilhaft zur Geltung, da so die CNT-haltige Beschichtung bis in den Austrittsschlitz der Breitschlitzdüse fortgesetzt werden kann. Die Gefahr des Abkühlens und eines damit verbundenen Verstopfens und einer ungleichmäßigen Erwärmung über die Breite der Breitschlitzdüse kann also effektiv vermieden werden.

Durch die Möglichkeit einer Innen-Beheizung der Düsen oder der Breitschlitzdüsen mit Hilfe einer CNT-haltigen Beschichtung kann regelmäßig auch auf die Verwendung metallischer Körper als Düsen oder Breitschlitzdüsen verzichtet werden, da regelmäßig keine Wärme von außen nachgefüllt werden muss. Dies ermöglicht den Einsatz von nicht oder schlecht wärmeleitenden Materialien zur Ausbildung der Düsen oder Breitschlitzdüsen, wie beispielsweise faserverstärkte Kunststoffe. Letztere sind leichter und steifer als entsprechende Metallkörper, wodurch weniger Durchbiegung der Düsen oder der Breitschlitzdüsen auftritt. Hierdurch wird ein gleichmäßigeres Auftragsbild erreicht, und der Justageaufwand der Düse oder der Breitschlitzdüse ist justiert.

In einem einzelnen Auftragsventil kann beispielsweise nun der Körper des Ventils aus einem nicht oder schlecht wärmeleitenden Material ausgebildet sein. Es müssen nur die Fluid leitenden Teile, die im Innenraum liegen, mit einer CNT-haltigen Beschichtung versehen werden. Es zeigt sich wiederum der Vorteil, dass die CNT-haltige Beschichtung bis nahe an die Austrittsdüse oder Breitschlitzdüse oder sogar in diese hinein bis in die Nähe der Abgabeöffnung reichen kann.

Die Erfindung soll nun anhand der beigefügten Zeichnungen, die Ausführungsbeispiele von Komponenten eines erfindungsgemäßen Heißauftragssystems zeigen, weiter erläutert werden. Es zeigen:
- Fig. 1: verschiedene Ausführungsformen eines Heizschlauchs für die Förderung von Schmelzklebstoffen oder Schmelzvergussstoffen;
- Fig. 2: ein Ausführungsbeispiel eines Heißleimschmelzers, welches einen Tank gemäß des erfindungsgemäßen Heißauftragssystems umfasst;
- Fig. 3: ein Ausführungsbeispiel eines derartigen Tanks in einer Ansicht von oben;
- Fig. 4: einen Schnitt A-A gemäß Fig. 3;
- Fig. 5: einen Längsschnitt durch ein Auftragsventil;
- Fig. 6: - schematisch - ein Beispiel eines typischen Aufbaus einer CNT-haltigen Beschichtung auf einem elektrisch leitfähigen Untergrund, beispielsweise einer Metallinnenfläche eines Heißleimtanks;
- Fig. 7: ein weiteres Beispiel eines typischen Schichtaufbaus einer CNT-haltigen Beschichtung in einer Fig. 5 entsprechenden Ansicht sowie
- Fig. 8: ein weiteres Beispiel eines typischen Schichtaufbaus einer CNT-haltigen Beschichtung, wiederum in einer Fig. 5 entsprechenden Ansicht.

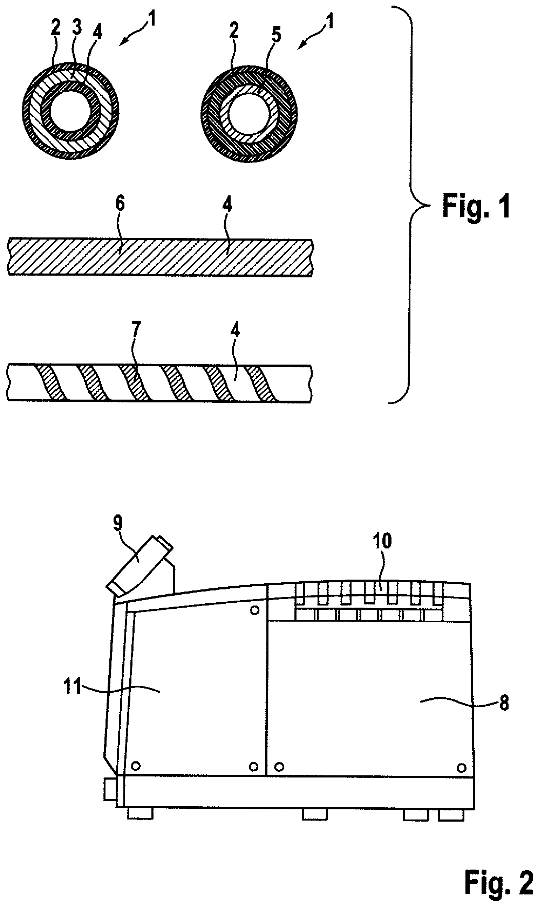

Die in Fig. 1 - schematisch - dargestellten Ausführungsbeispiele von Heizschläuchen des erfindungsgemäßen Heißauftragssystems dienen der Förderung von Schmelzklebstoff oder Schmelzvergussstoff, beispielsweise von Heißleim von einem Schmelzer zu Auftragsventilen. Die Heizschläuche 1 sind flexibel ausgebildet und können in unterschiedlichen Kurven verlegt werden. Darüber hinaus lassen sie regelmäßig eine Verlagerung beispielsweise der Auftragsventile relativ zum Substrat um begrenzte Strecken zu.

Der Heizschlauch 1 umfasst bei beiden Ausführungsbeispielen einen äußeren Mantel 2, der dem mechanischen Schutz und der Isolierung der beheizten Fluid führenden Innenschläuche 4, 5 dient. In einer ersten Ausführungsform ist der Innenschlauch 4 selbst nicht leitfähig und zum Beispiel als Gummi- oder Kunststoffschlauch ausgebildet. An der Außenfläche ist er mit einer CNT-haltigen Beschichtung 3 versehen, die als Widerstandsheizung dient. Diese Beschichtung ist beispielsweise an beiden Schlauchenden mit Elektroden zum Anschluss einer elektrischen Versorgungseinheit versehen (nicht dargestellt). Die CNT-haltige Beschichtung kann auf den Innenschlauch 4 aufgesprüht, auflackiert oder in jeder anderen geeigneten Beschichtungstechnik aufgetragen worden sein. Die erfindungsgemäße Beschichtung kann jedoch auch mittels eines Trägers, beispielsweise einem Klebeband, welches selbst eine CNT-haltige Beschichtung aufweist, aufgebracht werden.

Die CNT-haltige Beschichtung 3 kann dabei vollflächig, wie beispielhaft dargestellt und mit 6 bezeichnet, oder nur bereichsweise, wie beispielhaft dargestellt und mit 7 bezeichnet, aufgetragen sein.

In einer anderen Ausführungsform umfasst der Innenschlauch 5 selbst CNThaltiges Material. Es kann sich beispielsweise um einen extrudierten oder in einer anderen geeigneten Weise hergestellten Kunststoff- oder Gummischlauch handeln, dessen Wandmaterial CNT umfasst. Der Innenschlauch 5 hat in diesem Fall eine Doppelfunktion: Er dient der Fluidförderung und der Erwärmung des Fluids. Der Innenschlauch ist selbst mit Elektroden verbunden, die wiederum vorzugsweise an den beiden Enden des Innenschlauchs vorgesehen sind. Fig. 2 zeigt einen beispielhaft dargestellten Schmelzer 8 eines erfindungsgemäßen Heißauftragssystems. Es kann sich um einen Heißleimschmelzer zum Verflüssigen von Schmelzklebstoff oder um einen solchen Schmelzer handeln, welcher zum Verflüssigen von Schmelzvergussstoffen vorgesehen ist.

Der Schmelzer 8 weist ein Bediengerät 9 auf. Es dient dazu, Produktionsdaten einzugeben und Parameter, die maximale Heizleistung, Solltemperatur etc. eingeben zu können. Alternativ oder ergänzend kann der Schmelzer 8 auch eine Schnittstelle aufweisen, die beispielsweise durch die Steuerung einer übergeordneten Vorrichtung, beispielsweise einer Auftragsvorrichtung angesteuert werden kann. Die hierzu benötigte elektronische Steuerung ist in einem Elektronikraum 11 des Schmelzers integriert. Die Steuerelektronik des Schmelzers kann unter anderem eine Pumpensteuerung und eine Temperaturregelung, die zum Konstanthalten der Temperatur dient, umfassen.

Der Schmelzer 8 umfasst einen Tankraum 10, der bei der Darstellung gemäß Fig. 2 mit einem Deckel 10 verschlossen ist. Er umfasst einen Tank, der zur Bevorratung und Aufschmelzung von Schmelzklebstoffen oder Schmelzvergussstoffen dient. Ferner ist in dem Tankraum 10 mindestens eine Pumpe integriert, die zur Förderung des Schmelzklebstoffs oder des Schmelzvergussstoffes aus dem Tank zu Heizschläuchen 1 dient. Förderpumpen können beispielsweise Hubkolbenpumpen oder Zahnradpumpen sein.

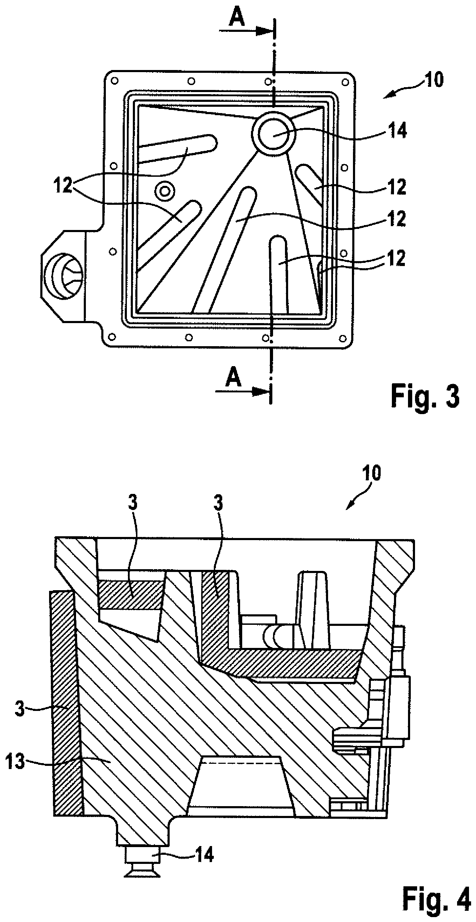

Fig. 3 zeigt einen Tank des Schmelzers 8 in einer Einzeldarstellung von oben. Der Tank ist - zusammen mit seinen Rippen 12 - mit einer Antihaftbeschichtung, beispielsweise PTFE oder Silikon-Beschichtung versehen. Die Rippen 12 dienen dazu, die Wärme effektiver in den in fester Form vorliegenden Schmelzklebstoff oder Schmelzvergussstoff zu übertragen.

In einer ersten Ausführung ist die Innenfläche lediglich teilweise, zum Beispiel streifen- oder spiralförmig, oder annähernd vollflächig mit einer CNT-haltigen Beschichtung versehen. Diese kann in einer Ausführungsform selbst mit Antihaftmitteln, d.h. beispielsweise mit Silikon- oder PTFE-Bestandteilen, versehen sein. In einer anderen Ausführung ist die CNT-haltige Beschichtung auf ihrer dem Innenraum des Tankes zugewandten Seite mit einer weiteren Antihaftbeschichtung versehen.

Bei derartigen Tanks erweist es sich als besonders vorteilhaft, dass die CNT-haltige Beschichtung nahezu auf sämtliche geometrischen Formen aufgebracht werden kann. So können beispielsweise auch die Rippen 12 beschichtet und somit direkt erwärmt werden, was der Aufheizdauer und Konstanthaltung der Temperatur zugute kommt. Mittels konventioneller Beheizung mit Heizpatronen sind die Rippen lediglich indirekt beheizbar.

Bei einer teilweisen oder vollflächigen Beschichtung des Tankraumes des Schmelzers 8, in welchem der Tank 10 untergebracht ist, kann der Tankgrundkörper aus einem beliebigen Material geformt sein, da eine gute Wärmeleitfähigkeit nicht zwingend erforderlich ist. Vorteilhafterweise kann das Grundmaterial aus einem wärmeisolierenden Material, wie zum Beispiel aus einem Hochleistungskunststoff oder einer Keramik bestehen.

Die CNT-haltige Beschichtung ist mit Elektroden kontaktiert, die für die Leistungsversorgung der CNT-haltigen Beschichtung vorgesehen sind. Ferner ist eine Temperaturregelung vorgesehen, die mindestens einen Temperatursensor zur Erfassung der Heißleimtemperatur aufweist. Die Temperaturregelung ist mit mindestens einer Steuerung verbunden, die in Abhängigkeit des mit dem Temperatursensor erfassten Temperatur-Ist-Werts die der CNT-haltigen Beschichtung zugeführte Leistung regelt. Bei den üblicherweise als Schmelzklebstoff oder Schmelzvergussmasse verwendeten Materialien liegt die Aufheiztemperatur zwischen 100° C und 220° C.

Wie in Fig. 4, die einen Schnitt gemäß Schnittlinie A-A durch den Tank 10 zeigt, kann die CNT-haltige Beschichtung 3 sowohl außen, als auch innen im Tank angebracht werden. Auch ist es möglich, die CNT-haltige Beschichtung 3 außen und innen vorzusehen. Wird die CNT-haltige Beschichtung nur außen angebracht, ist es von Vorteil, wenn das Tankgrundmaterial 13 gut wärmeleitend ist und vorzugsweise auch - durch eine entsprechende Masse - einen guten Wärmespeicher bildet. Geeignete Materialien sind beispielsweise Aluminium oder Grauguss.

In dem Tank 10 wird mit Hilfe der CNT-haltigen Beschichtung 3 beispielsweise als Granulat in fester Form zugegebener Schmelzklebstoff bis zu einer Verarbeitungstemperatur, die regelmäßig zwischen 100° C und 220° C beträgt, aufgeheizt und über einen Auslass 14 und daran angeschlossene, in Fig. 3 und 4 nicht dargestellte Heizschläuche Auftragsventilen zugeleitet.

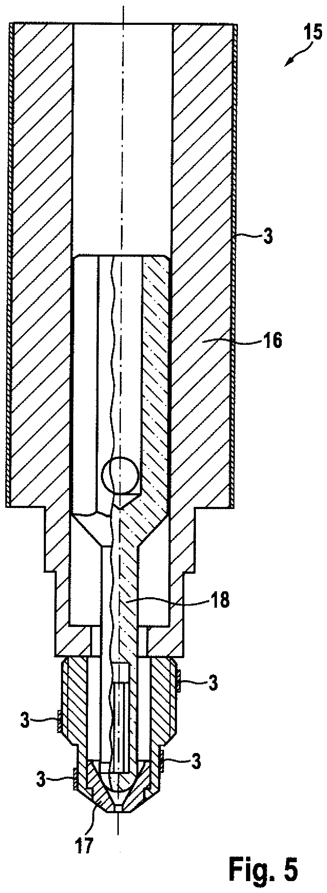

Ein derartiges Auftragsventil ist - schematisch - in Fig. 5 dargestellt. Es entspricht in seiner Funktion einem herkömmlichen, beispielsweise aus der DE 295 08 916 U1 bekannten Leimauftragsventil, mit Ausnahme der CNT-haltigen Beschichtung 3. Diese ist flächig nicht nur an der Außenkontur des Ventilkörpers 16, sondern auch an der Außenkontur der Düse, durch die der Schmelzklebstoff durch Verlagern des Verschlussorgans 18 abgebbar ist, vorgesehen. Dabei ist die CNT-haltige Beschichtung 3 im Bereich des Ventilkörpers 16 vollflächig, im Bereich der Düse 17 wendelförmig aufgebracht.

Anders als in Fig. 5 dargestellt, kann die CNT-haltige Beschichtung nicht oder nicht nur an der Außenkontur des Ventilkörpers und/oder der Düse vorgesehen sein, sondern auch oder nur an den Innenflächen der Kanäle, durch die der Schmelzklebstoff während des Auftrags geleitet wird.

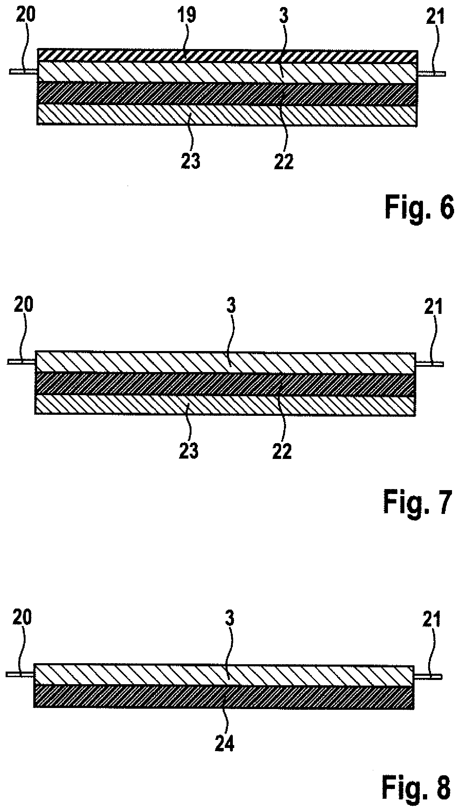

In Fig. 6 ist ein typischer Schichtaufbau, der eine CNT-haltige Beschichtung enthält, auf einem elektrisch leitenden Untergrund, zum Beispiel einer Metallinnenfläche eines Tanks, gezeigt. Der Schichtaufbau umfasst eine oben angeordnete, fett dargestellte Schutzschicht 19, die funktionale Eigenschaften, beispielsweise Antihafteigenschaften, aufweisen kann. Die darunter befindliche Schicht ist die CNT-haltige Beschichtung 3, die eine Heizschicht bildet. An beiden Enden der CNT-haltigen Beschichtung 3 sind Elektroden 20, 21 angeordnet, die der Beaufschlagung mit elektrischer Energie, der Heizenergie, dienen.

Gemäß Fig. 6 unterhalb der CNT-haltigen Beschichtung ist eine Isolationsschicht 22 vorgesehen, die die selbst elektrisch leitfähige CNT-haltige Beschichtung gegen den elektrisch leitfähigen Untergrund 23 isoliert. Die Isolationsschicht auflackiert, aufgesprüht, eingebrannt, plasmabeschichtet oder in einer anderen geeigneten Art auf dem Untergrund 23 aufgebracht sein.

In Fig. 7 ist ein weiterer Schichtaufbau dargestellt, welcher demjenigen gemäß Fig. 6 entspricht, so dass auf diesbezügliche Beschreibung zwecks Vermeidung von Wiederholungen verwiesen wird. Dieser Schichtaufbau umfasst jedoch keine äußere Schutzschicht. Ein derartiger Schichtaufbau ist insbesondere dann geeignet, wenn die nun die Außenschicht bildende CNT-haltige Beschichtung 3 für den jeweiligen Anwendungsfall geeignete Oberflächeneigenschaften, beispielsweise Antihafteigenschaften aufweist. Zudem ist in einem solchen Fall wichtig, dass die CNT-haltige Beschichtung 3 über die Elektroden 20, 21 lediglich mit einer für den Menschen ungefährlichen Niederspannung bis beispielsweise maximal 48V betrieben wird.

Ein weiterer, möglicher Schichtaufbau ist in Fig. 8 schematisch dargestellt. Bei diesem Schichtaufbau ist die CNT-haltige Beschichtung 3 direkt auf einen elektrisch nicht leitfähigen Untergrund 24, beispielsweise auf die Oberfläche eines Kunststoffkörpers aufgebracht.

Bei den vorbeschriebenen Schichtaufbauten handelt es sich lediglich um Beispiele. Auch weitere Schichten, beispielsweise Haftvermittlerschichten zwischen den dargestellten Schichten können vorhanden sein, um eine bessere Haftung der dargestellten Schichten aneinander zu erzielen. Als Haftvermittler können beispielsweise Silanhaftvermittler oder andere metall-organische Stoffe Verwendung finden, aber auch andere Haftvermittlerschichten dienen.

Bei einer direkten Beschichtung von Oberflächen von Kunststoffkörpern, die in Fig. 8 schematisch dargestellt ist, sind die Kunststoffkörper vorteilhaft zur besseren Anhaftung der CNT-haltigen Beschichtung selbst mit Haftvermittlern vorbeschichtet oder vorbehandelt. Hierzu ist beispielsweise eine Korona- oder Plasmavorbehandlung geeignet.

Die Erfindung ist keinesfalls auf das Aufschmelzen von Schmelzklebstoffen oder Schmelzvergussmassen beschränkt, sondern erstreckt sich auf Systeme, bei denen unter dem Eintrag von Wärme fließfähige Stoffe verarbeitet werden. Darüber hinaus ist die Erfindung nicht auf die hier nur beispielhaft beschriebenen Komponenten eines erfindungsgemäßen Heißsystems beschränkt. Sollte ein derartiges Heizsystem andere Komponenten, wie beispielsweise Verteilventile, Pumpen oder beliebige andere Komponenten enthalten, die zum Erhalt der Fließfähigkeit des unter Beheizung fließfähigen Materials beheizt werden müssen, so erstreckt sich die Erfindung auch auf die erfindungsgemäße Weiterbildung dieser Komponenten.

### Bezugszeichenliste:

- 1: Heizschlauch
- 2: Mantel
- 3: CNT-haltige Beschichtung
- 4: Innenschlauch
- 5: Innenschlauch
- 6: Beschichtung
- 7: Beschichtung
- 8: Schmelzer
- 9: Bediengerät
- 10: Tank
- 11: Elektronikraum
- 12: Rippen
- 13: Tankgrundmaterial
- 14: Auslass
- 15: Leimauftragsventil
- 16: Ventilkörper
- 17: Düse
- 18: Verschlussorgan
- 19: Schutzschicht
- 20: Elektrode
- 21: Elektrode
- 22: Isolationsschicht
- 23: Untergrund, elektrisch leitend
- 24: Untergrund, elektrisch nicht leitend

## Patentansprüche

1. Heißauftragssystem zum Auftrag unter erhöhter Temperatur fließfähigen Mediums, insbesondere zum Auftrag von Schmelzklebstoffen oder Schmelzvergussstoffen auf ein Substrat,
mit mindestens einer, von dem fließfähigen Medium durchflossenen, beheizten Komponente (10, 1, 15)
**dadurch gekennzeichnet,**
**dass** mindestens eine der Komponenten (10, 1, 15) eine Widerstandsheizung umfasst, die eine CNT-haltige Beschichtung (3) und/oder CNT-haltige Vergussmasse aufweist, wobei
die mindestens eine Komponente (10, 1, 15) einen Tank (10) für das Medium umfasst, oder/und wobei
die mindestens eine Komponente (10, 1, 15) einen Förderschlauch (1) für das Medium umfasst, oder/und wobei
die mindestens eine Komponente (10, 1, 15) ein Auftragsventil (15) zur Abgabe des Mediums an ein Substrat umfasst.

2. Heißauftragssystem nach Anspruch 1, wobei die mindestens eine Komponente (10, 1, 15) einen Tank (10) für das Medium umfasst, **dadurch gekennzeichnet, dass** die Widerstandsheizung derart in dem Innenraum des Tanks (10) angeordnet ist, dass sie in direktem Kontakt oder über eine Zwischenschicht in indirektem Kontakt mit dem Medium steht.

3. Heißauftragssystem nach Anspruch 1 oder 2, wobei die mindestens eine Komponente (10, 1, 15) einen Tank (10) für das Medium umfasst, **dadurch gekennzeichnet, dass** zwischen der Widerstandsheizung und dem Tank (10) eine wärmeisolierende Schicht vorgesehen ist.

4. Heißauftragssystem nach einem der Ansprüche 1 bis 3, wobei die mindestens eine Komponente (10, 1, 15) einen Tank (10) für das Medium umfasst, **dadurch gekennzeichnet, dass** der Tank (10) aus einem wärmeisolierenden Material ausgebildet ist.

5. Heißauftragssystem nach einem der Ansprüche 1 bis 4, wobei die mindestens eine Komponente (10, 1, 15) einen Tank (10) für das Medium umfasst, **dadurch gekennzeichnet, dass** der Tank (10) aus einem wärmeleitenden Material ausgebildet ist und die Widerstandsheizung an der Außenseite des Tanks (10) angeordnet ist.

6. Heißauftragssystem nach einem der Ansprüche 1 bis 5, wobei die mindestens eine Komponente (10, 1, 15) einen Förderschlauch (1) für das Medium umfasst, **dadurch gekennzeichnet, dass** die Widerstandsheizung auf einem Fluid fördernden Innenschlauch (4) vorgesehen ist.

7. Heißauftragssystem nach einem der Ansprüche 1 bis 6, wobei die mindestens eine Komponente (10, 1, 15) einen Förderschlauch (1) für das Medium umfasst, **dadurch gekennzeichnet, dass** die Widerstandsheizung im Wandvolumen eines Fluid fördernden Innenschlauchs (4) vorgesehen ist.

8. Heißauftragssystem nach einem der Ansprüche 1 bis 7, wobei die mindestens eine Komponente (10, 1, 15) ein Auftragsventil (15) zur Abgabe des Mediums an ein Substrat umfasst, **dadurch gekennzeichnet, dass** die Widerstandsheizung an der Außenseite des Auftragsventils (15) angeordnet ist.

9. Heißauftragssystem nach einem der Ansprüche 1 bis 8, wobei die mindestens eine Komponente (10, 1, 15) ein Auftragsventil (15) zur Abgabe des Mediums an ein Substrat umfasst, **dadurch gekennzeichnet, dass** die äußere Oberfläche des Auftragsventils (15) zumindest teilweise von einem wärmeisolierenden Material gebildet ist.

10. Heißauftragssystem nach einem der Ansprüche 1 bis 9, wobei die mindestens eine Komponente (10, 1, 15) ein Auftragsventil (15) zur Abgabe des Mediums an ein Substrat umfasst, **dadurch gekennzeichnet, dass** das Auftragsventil (15) eine Abgabedüse (17) für das Medium umfasst, die eine Widerstandsheizung aufweist.

11. Heißauftragssystem nach Anspruch 10 **dadurch gekennzeichnet, dass** die Widerstandsheizung die Form eines offenen, um den Düsenkörper der Abgabedüse (17) gelegten Rings oder eine sich etwa von dem Düseneingang bis zum Düsenausgang erstreckende Streifenform aufweist.

## Claims

1. Hot application system for applying a flowable medium at an elevated temperature, in particular for applying hot-melt adhesives or hot-melt sealing compounds to a substrate,
with at least one heated component (10, 1, 15) through which the flowable medium flows,
**characterized in that**
at least one of the components (10, 1, 15) includes a resistive heating element which has a coating (3) containing CNT and/or a sealing compound containing CNT, whereby
the at least one component (10, 1, 15) includes a tank (10) for the medium, and/or whereby
the at least one component (10, 1, 15) includes a feed hose (1) for the medium, and/or whereby
the at least one component (10, 1, 15) includes an application valve (15) for applying the medium to a substrate.

2. Hot application system in accordance with Claim 1, whereby the at least one component (10, 1, 15) includes a tank (10) for the medium, **characterized in that** the resistive heating element is located in the interior of the tank (10) in such a way that it is in direct contact with, or through an intermediate layer in indirect contact with, the medium.

3. Hot application system in accordance with Claim 1 or 2, whereby the at least one component (10, 1, 15) includes a tank (10) for the medium, **characterized in that** a heat insulating layer is provided between the resistive heating element and the tank (10).

4. Hot application system in accordance with any one of Claims 1 to 3, whereby the at least one component (10, 1, 15) includes a tank (10) for the medium, **characterized in that** the tank (10) is made of a heat insulating material.

5. Hot application system in accordance with any one of Claims 1 to 4, whereby the at least one component (10, 1, 15) includes a tank (10) for the medium, **characterized in that** the tank (10) is made of a heat conducting material and the resistive heating element is located on the outside of the tank (10).

6. Hot application system in accordance with any one of Claims 1 to 5, whereby the at least one component (10, 1, 15) includes a feed hose (1) for the medium, **characterized in that** the resistive heating element is located on an inner hose (4) which conveys fluid.

7. Hot application system in accordance with any one of Claims 1 to 6, whereby the at least one component (10, 1, 15) includes a feed hose (1) for the medium, **characterized in that** the resistive heating element is located in the wall volume of an inner hose (4) which conveys fluid.

8. Hot application system in accordance with any one of Claims 1 to 7, whereby the at least one component (10, 1, 15) includes an application valve (15) for applying the medium to a substrate, **characterized in that** the resistive heating element is located on the outside of the application valve (15).

9. Hot application system in accordance with any one of Claims 1 to 8, whereby the at least one component (10, 1, 15) includes an application valve (15) for applying the medium to a substrate, **characterized in that** the outer surface of the application valve (15) is made, at least in part, of a heat insulating material.

10. Hot application system in accordance with any one of Claims 1 to 9, whereby the at least one component (10, 1, 15) includes an application valve (15) for applying the medium to a substrate, **characterized in that** the application valve (15) includes a metering nozzle (17) for the medium, said nozzle having a resistive heating element.

11. Hot application system in accordance with Claim 10, **characterized in that** the resistive heating element has the form of an open ring positioned around the body of the metering nozzle (17), or has the form of a strip extending from the nozzle inlet to the nozzle outlet.

## Revendications

1. Système d'application de colle à chaud pour appliquer un milieu pouvant couler à une température élevée, en particulier pour appliquer des colles fusibles ou des matières de scellement fusibles sur un substrat,
avec au moins un composant (10, 1, 15) chauffé traversé par le milieu pouvant couler
**caractérisé en ce qu'**
au moins un des composants (10, 1, 15) comprend un chauffage de résistance qui présente un revêtement contenant des CNT (nanotubes de carbone) (3) et/ou un produit de scellement contenant des CNT (nanotubes de carbone),
au moins un composant (10, 1, 15) comprend un réservoir (10) pour le milieu, et/ou
au moins un composant (10, 1, 15) comprend un tuyau de transport (1) pour le milieu, et/ou
au moins un composant (10, 1, 15) comprend une soupape d'application (15) pour transmettre le milieu à un substrat.

2. Système d'application de colle à chaud selon la revendication 1 **caractérisé en ce que** le chauffage de résistance est disposé à l'intérieur du réservoir (10) de manière à ce qu'il soit en contact direct ou en contact indirect avec le médium via une couche intermédiaire.

3. Système d'application de colle à chaud selon la revendication 1 ou 2 **caractérisé en ce qu'**une couche calorifuge est prévue entre le chauffage de résistance et le réservoir (10).

4. Système d'application de colle à chaud selon les revendications 1 à 3 **caractérisé en ce que** le réservoir (10) est formé par un matériau calorifuge.

5. Système d'application de colle à chaud selon les revendications 1 à 4 **caractérisé en ce que** le réservoir (10) est formé par un matériau thermoconducteur et le chauffage de résistance est disposé sur la face extérieure du réservoir (10).

6. Système d'application de colle à chaud selon les revendications 1 à 5 **caractérisé en ce que** le chauffage de résistance est prévu sur un tuyau intérieur (4) transportant un fluide.

7. Système d'application de colle à chaud selon les revendications 1 à 6 **caractérisé en ce que** le chauffage de résistance est prévu dans le volume mural d'un tuyau intérieur (4) transportant un fluide.

8. Système d'application de colle à chaud selon les revendications 1 à 7 **caractérisé en ce que** le chauffage de résistance est disposé sur la face extérieure de la soupape d'application (15).

9. Système d'application de colle à chaud selon les revendications 1 à 8 **caractérisé en ce que** la surface extérieure de la soupape d'application (15) est au moins partiellement formée par un matériau calorifuge.

10. Système d'application de colle à chaud selon les revendications 1 à 9 **caractérisé en ce que** la soupape d'application (15) comprend une buse de sortie (17) pour le milieu qui présente un chauffage de résistance.

11. Système d'application de colle à chaud selon la revendication 10 **caractérisé en ce que** le chauffage de résistance présente la forme d'une bague ouverte placée autour du corps de la buse de la buse de sortie (17) ou une forme de bande s'étendant environ de l'entrée de la buse à la sortie de la buse.
